# EUROPEAN PATENT APPLICATION

(11) **EP 1 505 769 A2**
(43) Date of publication of application: **09.02.2005**
(21) Application number: 04253803.3
(22) Date of filing: 25.06.2004
(51) Int. Cl.: H04L 12/24

(54) **Diagnostic report transmission**

(30) Priority: 04.08.2003 US 634603
(71) Applicant: Hewlett-Packard Development Company, L.P., Houston, TX 77070 (US)
(72) Inventor: Nutt, Letty B., Boise, Idaho 83702 (US)
(74) Representative: Exell, Jonathan Mark

(57) **Abstract**

A network device (16) configured to transmit a diagnostic report (34). The network device (16) includes an error notification generator configured to generate an error notification (36) upon detection of a malfunction in the network device (16). The network device (16) includes a diagnostic module (32) configured to generate a diagnostic report (34) in response to the error notification (36). The network device (16) includes a communication module (38) configured to automatically execute transmission of the diagnostic report (34) to a service center (24) upon generation of the diagnostic report (34).

## Description

### BACKGROUND

Office devices have increased the efficiency of the modem office and increased the productivity of office staffs, through an increase in the functions that these devices can perform. Technical advances in office devices, however, have lead to increased complexity in the operations of the devices. One effect of this increased complexity is that trouble-shooting may become more difficult in the event of a malfunction.

Traditionally, technicians or customers call a service center, or help center, to seek assistance in fixing a malfunctioning office device. However, communicating the problem with the device to someone at the service center may be difficult. Devices thus have been designed to perform self-diagnostic functions.

Devices may be configured to print a configuration page reporting potential problems and helping a technician determine what is wrong with the device. The technician may then verbally communicate the information on the configuration page to a representative at the service center. Alternatively, the configuration page may be faxed to the service center.

In some office devices, a customer may access an electronic configuration page maintained on the device. The electronic configuration page may be accessed from a computer on the local network to which the device is connected. The electronic configuration page may be cut and pasted into an email or other application that may then be sent by a technician to the service center from the computer on the network.

The aforementioned solutions involve a technician or user locally accessing a network computer in order to send the configuration page to the service center. Often computers on the network are not located near the networked device that is malfunctioning. This leads to a logistical problem in which the technician must physically move to the location of a local network computer and back to the location of the networked device.

### SUMMARY

A network device configured to transmit a diagnostic report. The network device includes an error notification generator configured to generate an error notification upon detection of a malfunction in the network device. The network device includes a diagnostic module configured to generate a diagnostic report in response to the error notification. The network device includes a communication module configured to automatically execute transmission of the diagnostic report to a service center upon generation of the diagnostic report.

### BRIEF DESCRIPTION OF THE DRAWINGS

Fig. 1 is a schematic representation of a network system employing an embodiment of the invention.
Fig. 2 is a side view of a network device according to an embodiment of the invention.
Fig. 3 is an exemplary interface of the network device of Fig. 2.
Fig. 4 is a schematic representation of a diagnostic report according to an embodiment of the invention.
Fig. 5 is a flow chart illustrating a method of providing customer service according to an embodiment of the invention.

### DETAILED DESCRIPTION

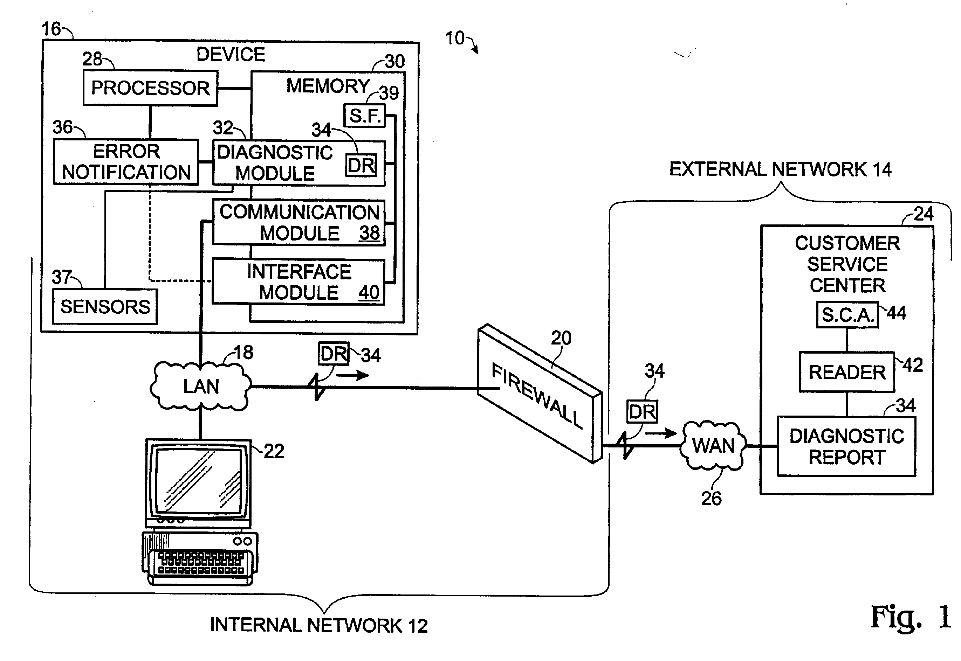

Referring initially to Fig. 1, a network environment suitable for use in implementing a customer service system is shown, the network environment being generally indicated at 10. As indicated, Network environment 10 may include an internal network 12 and an external network 14.

Internal network 12 may be a private customer network. Customers may include individuals as well as companies, organizations, and any other type of entities. internal network 12 includes a device 16 connected to a local area network (LAN) 18. Device 16, once connected to LAN 18, may be referred to as a network device. A firewall 20 separates internal network 12 from external network 14. Typically, at least one network client 22 may be present on LAN 18 as a part of internal network 12.

External network 14 may include a customer service center 24 connected to a wide area network (WAN) 26, such as the Internet. A connection to WAN 26 thus may enable service center 24 to communicate with customers or users all over the world. Service center 24 also thus may provide a location on external network 14.

Network device 16 may be any type of office device or computer peripheral. For example, network device 16 may be, a printer, a facsimile, a scanner, a copier, a multifunction device, and/or the like. As indicated, network device 16 may include a processor 28 and memory 30. Processor 28 may be any suitable processor configured to execute device-specific software and firmware. Similarly, memory 30 may be any suitable memory configured to store the device-specific software and corresponding data as described herein.

Referring still to Fig. 1, it will be noted that network device 16 includes a diagnostic module 32 configured to generate a diagnostic report 34. Diagnostic module 32 may include one or more sensors configured to detect malfunctions in the network device. Diagnostic module 32 may also include software that monitors and records detailed information about the status, or configuration, of network device 16. This information may be stored as a diagnostic report 34 in memory 30.

The information contained in diagnostic report 34 may vary as a function of device type. However, diagnostic report 34 typically will include identifying information for network device 16. Diagnostic report 34 may be formatted in a predefined electronic format that enables it to be programmatically read. For example, diagnostic report 34 may be formatted in Extensible Markup Language (XML), Hypertext Markup Language (HTML), or Comma Delimited Format, as well as other suitable formats that may be programmatically read. Programmatically read data typically may be machine read and machine sorted and processed because the format is machine compatible, and is recognized by the machine upon receipt.

Network device 16 may include a communication module 38 configured to enable network device 16 to communicate with a network, such as LAN 18. Communication module 38 may include hardware and software for enabling network device 16 to communicate. Communication module 38 may be configured to transmit data using Simple Mail Transfer Protocol (SMTP), or Hypertext Transfer Protocol (HTTP), as well as any other suitable network communication protocol. Using SMTP or HTTP to transfer data may be useful for enabling data to be easily transferred from within LAN 18 through firewall 20 to a location on external network 14. The ease of transfer may be enabled because firewalls typically are designed to permit data transfers using SMTP and HTTP, provided that the transfers are initiated from the internal network side of the firewall. Using SMTP or HTTP thus may permit a transfer through the firewall without creating network security breaches.

Communication module 38 may be configured to automatically execute transmission of diagnostic report 34 from the network device 16. Typically, diagnostic report 34 is transmitted to service center 24, where it may be programmatically read. Service center 24 thus may determine a suggested course of action based on diagnostic report 34.

Network device 16 may include an interface module 40 configured to enable users to interact with the device. Interface module 40 may include both hardware and software to enable the interaction between a user and network device 16. Typically, interface module 40 will include a display, one or more user-selectable inputs, such as via mechanical buttons or a touch screen. The structures included in the interface module may depend on the type of device.

Network device 16 may be configured to receive an error notification 36. Error notification 36, in turn, may trigger a response in network device 16. The response may include generating diagnostic report 36, if it has not been generated previously, and/or transmitting diagnostic report 36 over a network. Error notification 36 may include a user-selected input from the interface module. Alternatively, error notification 36 may be generated by a malfunction detected by diagnostic module 32. For example, diagnostic module 32 may produce an error notification 36 in the form of an automatic signal generated by a machine error in network device 16.

Network environment 10 may be used to implement a customer help system as follows. An error notification 36 may be received by processor 28 of network device 16, either from a user-selected input through interface module 40, or from a machine malfunction detected by diagnostic module 32.

Diagnostic module 32 may then generate diagnostic report 34 by recording the status of the network device from internal device sensors 37. Device sensors 37 may sense various internal conditions within network device 16. Device sensors 37 may vary depending upon the type of network device. For example, a multi-function device capable of printing, scanning and faxing may have sensors associated with each function. The multi-function device may include printing sensors for detecting paper jams, low toner, and other printer related processes, scanning sensors for detecting image characteristics, light intensity, and other scanning related processes, faxing sensors for detecting fax information.

Diagnostic report 34 may also include information read from a configuration status file 39 stored in memory 30. Status file 39 records data about the network device, such as the number of documents printed, scanned, faxed, etc. Status file 39 may also include information about the network device, such as the device model, serial number, etc. Diagnostic module 32 may then transfer diagnostic report 34 to communication module 38 for transmitting it from device 16.

Communication module 38, typically, transmits diagnostic report 34 through LAN 18. A commonly known firewall penetrating protocol may be used to facilitate passage through firewall 20 to an external location, such as customer service center 24, on external network 26. Firewall penetrating protocols include SMTP, HTTP, SNMP, SHTTP, and similar network communication protocols. It should be understood that any communication protocol may be used to penetrate a firewall provided the communication protocol is recognized by the firewall. The examples of firewall penetrating protocols listed above are not an exhaustive list and should not be construed as exhaustive.

Diagnostic report 34 then may be received by customer service center 24 where it may be programmatically read by a reader 42. Reader 42 may be a computer or similar device configured to programmatically read diagnostic report 34 and sort the information contained therein. The information may be sorted by data type, such as model number, or error codes associated with device sensors, etc.

After programmatically reading and sorting the information in diagnostic report 34, customer service center 24 may determine a suggested course of action 44. Suggested course of action 44 may inciude a series of steps to be performed by a user or a repair technician to return a malfunctioning device to a working condition. Additionally, suggested course of action 44 may include instructions for proper operation of a device that is not malfunctioning, where a user requires guidance.

Determining the suggested course of action may be done programmatically based on diagnostic report 34. Alternatively, the determination of suggested course of action 44 may be made with the aid of human review of diagnostic report 34, and possibly after person-to-person communication between a customer service agent at service center 24 and a customer, or customer representative.

Suggested course of action 44 may be communicated back to a customer, or a customer representative by any method of communication including email, telephone, facsimile, letter, etc. A service agent at service center 24 receives a call from a user, or a customer, or a customer representative close in time to receipt of diagnostic report 34 from network device 16. The customer service agent may thus match the customer with diagnostic report 34 and may provide that customer directly with suggested course of action 44.

It should be understood that a very large number of possible suggested courses of action are possible. The specific selected course of action may depend on the information contained in the diagnostic report as well as possible input from the customer and/or the service agent.

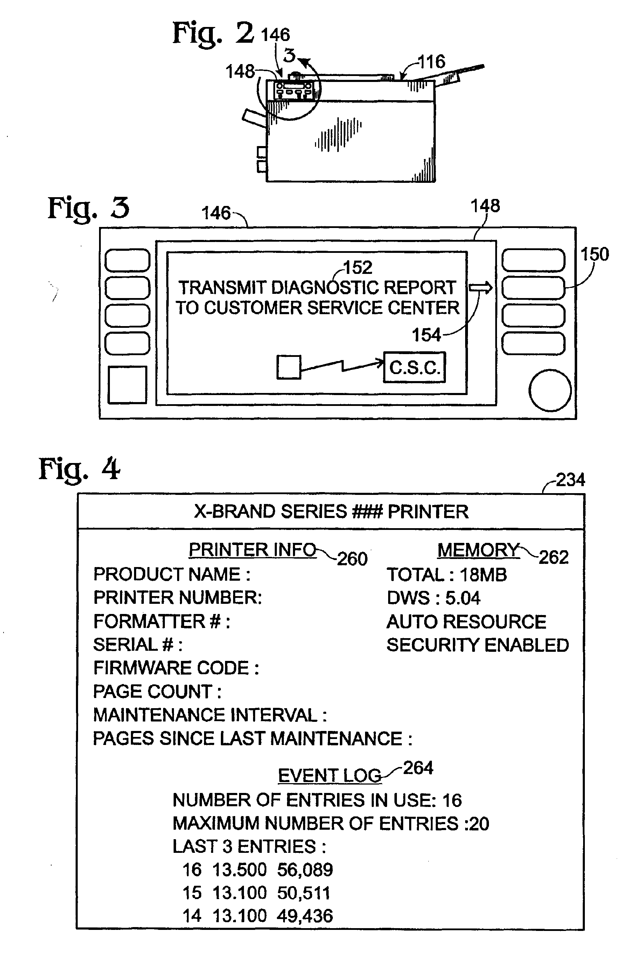

Fig. 2 illustrates a network device 116, which may be used in a system for providing customer service. In the depicted embodiment, network device 116 is a printer for producing hardcopies of documents. Network device 116 includes a control panel 146. Control panel 146 may be a part of an interface module of the network device. As noted above, the interface module may enable a user of the network device to interact with the network device. For example, a user may access device functions, change device settings, etc.

Fig. 3 provides a more detailed illustration of control panel 146 of Fig. 2. Control panel 146 may include a display 148 configured to present information about network device 116 to a user. Display 148 may also be a liquid crystal display, a thin film transistor, or similar display device. Display 148 may be a touch-sensitive screen.

Control panel 146 may include a variety of user-selectable buttons 150. Control panel 146 may employ hard key buttons and/or soft key buttons. Hard key buttons may be associated with specific functions, settings, or operations. Soft key buttons may be user-selectable buttons that are associated with a prompt on display 148. Such prompt, in turn, may be associated with a changeable functions, settings, or operations.

A text description 152 of one of the changeable functions of network device 116 may be visible on display 148. In the depicted illustration, text description 152 corresponds to a function for transmitting a diagnostic report to a customer service center. As shown in Fig. 3, one of buttons 150 is associated with the function described by text description 152. This may be indicated on display 148 by arrow 154.

Fig. 4 illustrates an exemplary diagnostic report 234. Diagnostic report 234 may include information concerning the network device, as indicated at 260. Device information 260 may include a product name, product number, firmware codes, and similar information. Diagnostic report 234 may also include network device memory information 262, detailing an amount and type of memory that the network device includes. Diagnostic report 234 may also include an event log 264, which records events that the device has experienced. For example, a jam in a print device may be recorded and categorized.

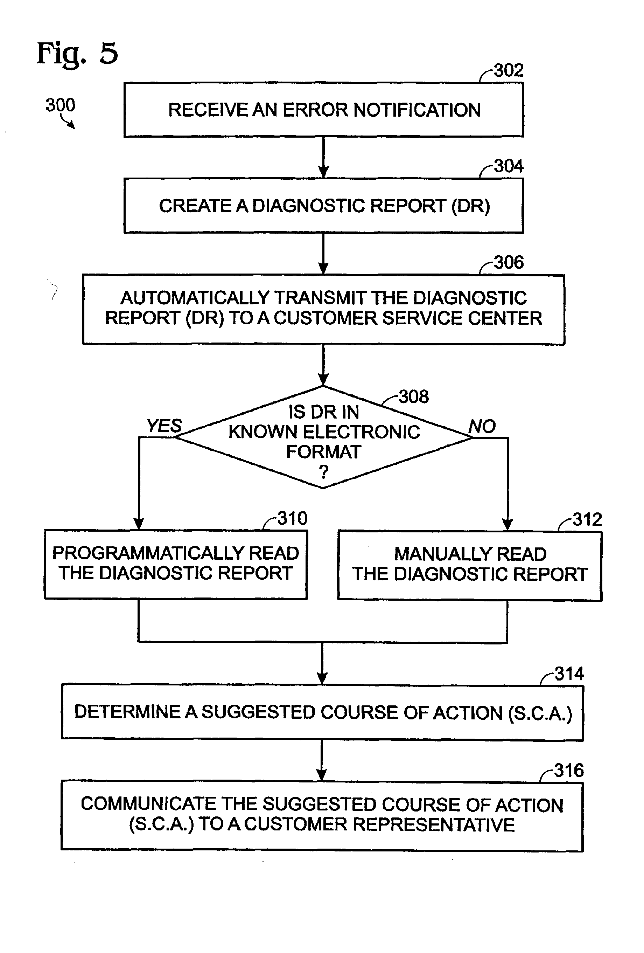

Fig. 5 illustrates a flow chart of a method for providing customer support, the method being indicated generally at 300. As shown, a network device receives an error notification from either a user input (indicating a malfunction) or an automatically detected error, at 302. The network device creates a diagnostic report in response to the error notification, as indicated at 304. Typically, a diagnostic module creates the diagnostic report based on either a sensed machine malfunction, or in response to a user selection.

The network device automatically transmits the diagnostic report to a customer service center, at 306. The network device may be transmitted in an electronic format using any suitable communications protocol. In one embodiment, a determination may be made to see if the diagnostic report is in a known electronic format, at 308. If the diagnostic report is in a known electronic format, the customer service center programmatically reads the report, and may perform other automated procedures to the diagnostic report, as indicated at 310. If the diagnostic report is not in a known electronic format, the customer service center manually reads the diagnostic report, as indicated at 312.

A suggested course of action may be determined based on the diagnostic report, as indicated at 314. In one embodiment, an automated process generates the suggested course of action based on the data read from the diagnostic report. The automatic generation of the suggested course of action may be possible for certain types of malfunctions that are easily identified based on data in the diagnostic report. However, the suggested course of action may be generated based on human interpretation of the diagnostic report and/or direct communication with a user. The suggested course of action may then be communicated to a customer representative, at 316. Communicating the suggested course of action to the customer representative may occur verbally over a telephone connection, or verbally using a network connection, or in written form. A customer representative may be any agent of the customer, the customer, a user, or an agent of the user. For example, the customer representative may be an actual customer/owner of the malfunctioning network device, a service technician repairing the network device, or an employee of the actual customer/owner of the network device.

While the present disclosure has been made with reference to the foregoing preferred embodiments, those skilled in the art will understand that many variations may be made therein without departing from the spirit and scope defined in the following claims. The disclosure should be understood to include all novel and non-obvious combinations of elements described herein, and claims may be presented in this or a later application to any novel and non-obvious combination of these elements.

## Claims

1. A method of diagnosing network devices, comprising: receiving an error notification (302) in a network device; creating a diagnostic report (304) relating to the network device; and automatically transmitting the diagnostic report (306) through a firewall to a service center.

2. The method of claim 1, wherein creating the diagnostic report includes generating the diagnostic report in an electronic format (304); and wherein transmitting the diagnostic report (306) includes using a firewall penetrating protocol.

3. The method of claim 2, further includes: receiving the diagnostic report at the service center in the electronic forma t (308); and reading the diagnostic report programmatically (310) at the service center; and determining a suggested course of action (314) based on the diagnostic report at the service center.

4. A network device configured to transmit a diagnostic report, the network device comprising: an error notification generator configured to generate an error notification (36) upon detection of a malfunction in the network device (16); a diagnostic module (32) configured to generate a diagnostic report (34) in response to the error notification (36); and a communication module (38) configured to automatically execute transmission of the diagnostic report (34) to a service center (24) upon generation of the diagnostic report (34).

5. The network device of claim 4, wherein the diagnostic module (32) is configured to produce the diagnostic report (34) in an electronic format; and wherein the communications module (38) transmits the diagnostic report (34) through a network firewall (20) to a location on an external network (14).

6. A method of providing help to a user of a network device comprising: generating an error notification (36) in response to a detected malfunction in the network device (16); generating a diagnostic report (34) relating to the malfunction in the network device (16); automatically transmitting the diagnostic report (34) over a network (18, 26) to a service center (24) in response to the error notification (36); receiving the diagnostic report (34) relating to the network device (16) at the service center(24); determining a suggested course of action (314) based on the diagnostic report (34); and communicating the suggested course of action (316) to the user.

7. The method of claim 6, wherein receiving the diagnostic report (34) includes receiving the diagnostic report (34) in an electronic format; and wherein transmitting the diagnostic report includes transmitting the diagnostic report (34) through a firewall (20) to an external network (14).

8. The method of claim 7, further including: programmatically reading the diagnostic report (34) received from the network device (16) in the electronic format; and determining the suggested course of action occurs based on the programmatically read diagnostic report (34).

9. The method of claim 6, wherein transmitting the diagnostic report includes transmitting the diagnostic report (34) through a firewall (20) to an external network (14).

10. A user service system comprising: a service center (24); a network device (16) having a diagnostic module (32) configured to produce a diagnostic report (34) in response to an error notification (36) received from an error notification generator, and a communications module (38) configured to automatically transmit the diagnostic report (34) from the network device (16) to the service center (24) upon receipt of the error notification(36); and a network (18, 26) connecting the networked device (16) and the service center (24), wherein the network includes a firewall (20) interposed the network device and the service center.
